# EUROPEAN PATENT APPLICATION

(11) **EP 3 156 667 A1**
(43) Date of publication of application: **19.04.2017**
(21) Application number: 16193016.9
(22) Date of filing: 10.10.2016
(51) Int. Cl.: F16B 13/00

(54) **ANCHOR FOR FIXING INSULATION TO A SUBSTRATE**

(30) Priority: 13.10.2015 GB 201518060
(71) Applicant: Ollis, William Henry, Buckinghamshire HP17 8AH (GB); Ollis, Jack, Haddenham, Buckinghamshire HP17 8AH (GB)
(72) Inventor: Ollis, William Henry, Buckinghamshire HP17 8AH (GB); Ollis, Jack, Haddenham, Buckinghamshire HP17 8AH (GB)
(74) Representative: Morris, Jonathan Paul

(57) **Abstract**

An anchor (1) for fixing insulation (2) to a substrate (4). The anchor (1) includes a percussively drivable helical fastener (5), and a screw-in retainer (3), said screw-in retainer (3) having a screw thread (23) arranged to cut into the insulation (2). The anchor (1) is arranged such that, in use, the helical fastener (5) imparts torque to the screw-in retainer (3) as the helical fastener (5) is driven percussively into the substrate (4), causing the retainer (3) to screw into the insulation (2).

## Description

The invention relates to an anchor for fixing insulation to a substrate. The anchor is particularly suited for use in the construction industry for fixing insulative materials, such as insulation boards / rolls, to a substrate, such as a masonry, concrete or timber.

There are a number of known fixing systems in the construction industry that secure insulation to masonry, concrete or timber. For example, one system uses a large diameter plastic or metal head and a securing screw. The head is secured to an outer surface of the insulation. Another system uses a substantially planar large diameter retaining head, which is fitted below the outer surface of the insulation. A fitter cores out a disc of insulation. The retaining head is secured below the outer surface of the insulation, and the disc of insulation is subsequently placed over the retaining head. The purpose of this technique is to thermally isolate the head away from conductive heat loss to the outside and to provide a fire resistant cap. Another advantage is that render applied to the insulation can adhere flush across the board without interruption from the retaining head. In other systems, the retaining head sits flush with the outer face of the insulation, however it is generally accepted as better practice to thermally isolate and cap the head.

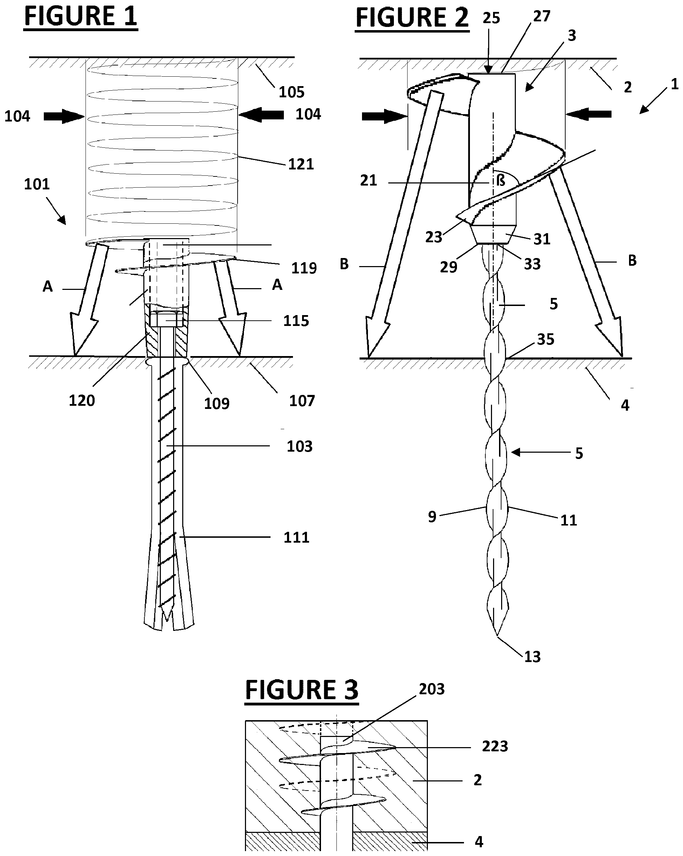

Other known systems use large diameter screw-in retainers to fix insulation to a substrate. An example, of this type of anchor is shown in Figure 1. The anchor includes a large diameter screw-in retainer 101 and an attachment screw 103. The retainer includes a spiral screw thread 119, which typically incorporates at least one full rotation of twist about a retainer body 120, and which has a smaller diameter leading end and larger diameter trailing end. The screw thread 119 typically has a diameter in the range 15mm to 100mm. Typically the screw thread 119 is angled at around 4 degrees off a perpendicular to a longitudinal axis. This is a very shallow lead. To attach insulation 105 to a substrate 107 using this system, a hole 109 is first drilled into the substrate 107. The attachment screw 103 is inserted into a central bore 113 formed in the screw-in retainer body 120. A wall plug 111 having an anti-rotation part and a compression zone is mounted on to the attachment screw 103. The bore 113 has a hexagonal cross-section. The attachment screw 103 includes a hexagonal head 115, which engages with the hexagonal bore 113. Thus the screw-in retainer head 101 and the attachment screw 103 are arranged to rotate together. A hexagonal turning tool is inserted into an open end of the bore 113 and the retainer 101 is rotated by a power tool such as a drill. The tool applies torque to the plastic retainer 101, which in turn imparts torque to the attachment screw 103 via the hexagonal head 115. The tool drives the assembly through the insulation 105. The wall plug 111 is driven into the hole 109 in the substrate. The anti-rotation part of the plug 111 prevents plug from rotating when it is located in the hole 109, which causes the screw 103 to be drawn into the plug 111. The compression part, compresses as the screw 103 progresses deeper in to the plug 111. The retainer 101 cuts a helical pathway 121 into the insulation material. Thus the retainer 101 bites into the insulation 105 and holds it to the substrate 107. However it has been found with this type of system that there is a tendency for the screw-in retainer 101 to chew up the insulation board under some circumstances. Figure 1 shows the screw-in retainer 101 has rotated through approximately eight turns when fully inserted. This level of rotation tends to weaken the insulation 105 material. A much weakened column of insulation 104 is created immediately above the retainer 101. The retainer 101 is seated well within the depth of insulation 105, which limits spiral loading as shown by the short white arrows A in Figure 1. The retainer 101 is deep set and the spiral angles are shallow and weak. Also, the wall plug 111 arrangement having anti-rotation and compression features is complex.

A similar anchor system to that shown in Figure 1, is disclosed in EP1857607B1. The screw-in retainer head disclosed in that document has a shallow spiral lead, of around 4 degrees off a perpendicular to the longitudinal axis at the maximum radius. This shallow spiral thread chews through at least 4 full spiral rotations before it's fully seated in contact with the plug sleeve to which it's retained. This means it does not deliver substantial compressive load within the insulation to hold it tightly against the substrate.

There are other anchors having screw-in retaining heads, such as the head disclosed in EP0811773B1, which have similar spiral thread configurations to that described above. These other anchors also have a tendency to chew up the insulation when screwed in, thereby destroying compressive load carrying capacity of the anchor.

Compressive load capacity is important as there may be gaps behind the insulation caused by, for example un-even walls.

Accordingly the invention seeks to provide an anchor for fixing insulation to a substrate that mitigates at least one of the aforementioned problems, or at least provides an alternative to known anchor systems. In particular, the invention seeks to provide an anchor for fixing insulation, such as mineral wool, fibreglass, expanded polystyrene, expanded polyurethane or similar, to a substrate, such as masonry, concrete or timber, that reduces the extent to which the insulation is "chewed" up on insertion. The invention seeks to provide an anchor for fixing insulation to a substrate that has an improved capacity for dealing with compressive loads applied to the anchor. In a particularly preferred embodiment the invention seeks to provide an anchor for fixing insulation to a substrate that can be inserted percussively into the insulation and substrate.

According to one aspect of the invention there is provided an anchor for fixing insulation to a substrate, said anchor including a percussively drivable helical fastener, and a screw-in retainer, said screw-in retainer having a screw thread arranged to cut into the insulation. The anchor is arranged such that, in use, the helical fastener imparts torque to the screw-in retainer as the helical fastener is driven percussively into the substrate, causing the retainer to screw into the insulation.

The helical fastener is driven by a percussive tool. The percussive tool can be a power tool, for example it may comprise a hammer drill having an S.D.S adapter and hammer attachment that is arranged to percussively engage a rear end of the helical fastener. As the helical fastener is driven percussively into the substrate the interaction between the helical fastener and the substrate causes the helical fastener to rotate about its longitudinal axis. Rotation of the helical fastener causes the retainer to rotate, thereby screwing the retainer into the insulation. The screw-in retainer is arranged substantially co-axially with helical fastener.

The invention reduces the amount of damage caused by the screw-in retainer since the lead for a percussively driven helical fastener is substantially larger than for a conventional screw thread, which enables the retainer screw thread to have a larger lead. This means that fewer helical turns are formed in the insulation by the retainer screw thread and a thicker amount of insulation is gripped in a screw thread trough.

Advantageously the helical fastener can include a substantially solid elongate core and at least one cutting blade extending radially outwards from the core, said cutting blade extending helically along at least a part of the length of the core. In preferred embodiments the or each cutting blade extends along a substantial part of the length of the core, and preferably along substantially the entire length of the core.

Advantageously the fastener can include a plurality of cutting blades extending radially outwards from the core, each of said cutting blades extending helically along at least a part of the length of the core. In preferred embodiments, the fastener includes first and second cutting blades. The first and second cutting blades provide the fastener with first and second helical starts. The first and second blades extend radially outwards from the core in substantially opposite directions. The first and second fasteners are substantially diametrically opposed. In some embodiments the fastener includes a third blade extending radially outwards from the core. The third blade extending helically along at least a part of the length of the core. The third blade provides the fastener with a third helical start. The first, second and third blades are substantially evenly spaced circumferentially around the core.

Advantageously the lead of the screw-in retainer substantially matches the lead of the helical fastener. That is, the lead of the at least one helical cutting blade substantially matches the lead of the screw-in retainer screw thread. For embodiments wherein the helical fastener includes a plurality of helical cutting blades and the retainer includes only a single start, the lead of the helical fastener substantially matches the lead of the screw-in retainer comprising the single start.

Advantageously the lead of at least one of the helical fastener and the screw-in retainer can be greater than or equal to 30mm. In preferred embodiments the lead of at least one of the helical fastener and the screw-in retainer is greater than or equal to 35mm, and more preferably still greater than or equal to 40mm.

Advantageously the lead of at least one of the helical fastener and the screw-in retainer can be less than or equal to 60mm. In preferred embodiments, the lead of at least one of the screw-in retainer and the helical fastener is less than or equal to 55mm, and more preferably still less than or equal to 50mm. Particularly preferred embodiments have leads in the range 30mm to 50mm.

The screw-in retainer is mounted on the helical fastener. In some preferred embodiments the helical fastener is a separate component from the screw-in retainer. This enables the screw-in retainer to move translationally along the helical fastener.

Advantageously the screw-in retainer includes a body, and the body is arranged to interact with the or each helical cutting blade such that, in use, the helical fastener imparts torque to the screw-in retainer by means of the helical cutting blades interacting with the body. As the helical fastener is driven into the substrate, the helical blades apply torque to the retainer body, which causes the retainer to rotate and screw into the insulation.

The retainer screw thread is an external screw thread. The screw thread protrudes radially outwardly from the body. The screw thread extends along the body through approximately 1 turn. In some embodiments the screw thread extends along the body for at least 270 degrees of rotation. In some embodiments the screw thread extends along the body for less than or equal to 450 degrees of rotation.

In preferred embodiments the leading end of the thread spirals outwards from a minimum radius to a maximum radius. In one embodiment the minimum radius is around 15mm and the maximum radius is around 30mm. The radial distances are taken from the central longitudinal axis of the body.

In preferred embodiments the length of the body is typically in the range 40mm to 60mm, and preferably around 50mm.

Advantageously the body frictionally engages the or each helical cutting blade. When the helical fastener is fixed into the substrate, the frictional fit between the retainer body and the or each helical cutting blade offers some resistance to axial loads applied to the screw-in retainer.

Advantageously the body can include a formation such as an aperture for receiving the helical fastener. In use, the helical fastener is located within the aperture.

Advantageously the aperture can be sized for a tight fit with the or each helical cutting blade.

Advantageously the shape of the aperture can substantially match a transverse cross-section of the helical fastener. The cross-section is transverse to the longitudinal axis of the helical fastener. In some embodiments the helical fastener has a substantially cruciform transverse cross-section.

Advantageously the aperture can have a substantially cruciform shape.

Advantageously the body can include a central bore. In preferred embodiments the bore has a substantially cylindrical cross-section. The aperture is located within the bore, preferably towards one end. A rear end of the bore is open. The helical fastener is located within the bore. The helical fastener is arranged substantially co-axially with the bore. The open rear end of the bore is arranged to receive a hammer tool.

Advantageously the bore can include at least one of an end wall and an internal wall, and the aperture is formed in at least one of the end wall and the internal wall.

Advantageously the helical fastener can have a leading end and a rear end, and includes a head located towards the rear end. The head prevents the helical fastener from separating from the screw-in retainer. For example it can be arranged to engage the end/internal wall of the bore. In some embodiments, the head is sized and shaped such that it does not impart torque to the screw-in retainer body as the helical fastener moves relative to the body.

Advantageously the or each helical cutting blade can have a helical angle that is greater than or equal to 20° to the longitudinal axis of the core. Advantageously the or each helical cutting blade can have a helical angle that is less than or equal to 50° to the longitudinal axis of said core.

Advantageously the retainer screw thread can have a helical angle that is greater than or equal to 60° to the longitudinal axis of the retainer. Advantageously the retainer screw thread can have a helical angle that is less than or equal to 85° to the longitudinal axis of said core. Preferably the helical angle of the screw thread is in the range 72° to 83°.

Advantageously, in some preferred embodiments, the helical fastener is fixed to the screw-in retainer. In this arrangement the fastener and retainer are locked together for rotation and the retainer is not moveable axially with respect to the fastener. The fastener and retainer form a fixed assembly or component. For example, the fastener can be welded to the retainer. In some embodiments the retainer can include a metal, such as steel. In some embodiments the helical fastener can include a metal, such as steel. In some embodiments both the retainer and fastener can include a metal, such as steel. An anchor having a high melting point, say in excess of 900°C or 1000°C, will typically meet fire resistance requirements.

In some embodiments the screw-in retainer includes plastic, such as nylon. This provides a light weight and cheaper retainer. The screw-in retainer can comprise a moulded component.

In preferred embodiments the fastener has a twisted body.

In preferred embodiments the fastener includes a pointed leading end. In preferred embodiments the axial core is locally reduced in diameter by at least 10% to form a substantially conical or frusto-conical pointed leading end. The or each blade blends into the pointed leading end.

In preferred embodiments the or each blade extends helically around the core for at least one full rotation of the core.

In preferred embodiments the or each blade extends along at least 75% of the full length of the fastener.

In preferred embodiments a maximum cross sectional diameter of the axial core is at least sixty percent less than a cross sectional circumscribed diameter of the helix.

In preferred embodiments the angle of the helical angle of the or each blade helical is substantially uniform, for a given diameter.

In preferred embodiments the or each blade is substantially slender and elongate in cross section.

In preferred embodiments the or each blade is tapered in cross-section. In cross-section, a root of the blade has a greater thickness than the thickness of a blade tip. The root is radially closest to the core. The tip is radially furthest from the core.

In preferred embodiments the or each blade has a radiused cross sectional root.

In preferred embodiments the cross-sectional circumscribed diameter of the fastener helix is greater than or equal to 4mm, and preferably greater than or equal to 6mm. In preferred embodiments the cross-sectional circumscribed diameter of the fastener helix is less than or equal to 20mm or less, and preferably less than or equal to 15mm. Typically the cross-sectional circumscribed diameter of the fastener helix is in the range 6 to 10mm, and is preferably around 8mm.

In preferred embodiments the thickness of the or each blade at its tip is greater than or equal to 0.25mm. In preferred embodiments the thickness of the or each blade at its tip is less than or equal to 2.5mm.

In preferred embodiments the fastener may include stubby reinforcing ribs, which extend radially outwards from the axial core. The or each reinforcing rib extends helically along at least a part of the length of the core. Preferably each reinforcing rib is located between a pair of helical blades. The or each stubby reinforcing rib is spaced equidistantly between the helical blades.

In preferred embodiments the stubby reinforcing ribs have at their outer periphery an edge thickness that is at between 1.5 times and 8.5 times an edge thickness of a blade tip.

In preferred embodiments the stubby reinforcing ribs are inclined upon a helical angle of between 8° and 23° to the longitudinal axis of the core.

In preferred embodiments the helical angle of the stubby reinforcing ribs is at least 6° more shallow than the helical angle of the or each helical blade.

According to another aspect of the invention there is provided a method for fixing insulation, such as mineral wool, fibreglass, expanded polystyrene, expanded polyurethane and similar, to a substrate, such as a masonry, concrete or timber, including: providing an anchor including a percussively drivable helical fastener, and a screw-in retainer, said screw-in retainer having a screw thread arranged to cut into the insulation; driving percussively the helical fastener into the substrate, causing the helical fastener to rotate about a longitudinal axis; the helical fastener imparting torque to the retainer as the helical fastener is driven percussively into the substrate; and the retainer screwing into the insulation in response to the torque imparted by the helical fastener.

The method can include using a power tool to drive percussively the helical fastener in the substrate. In the method, substantially no torque is applied to the screw-in retainer by the power tool. That is, the application of torque to the screw-in retainer is not the primary means by which the screw-in retainer is driven into the insulation. For example, a hammer drill including an S.D.S adapter and an elongate hammer can be used to drive the helical fastener. The elongate hammer strikes the rear end of the helical fastener to drive it into the substrate. The elongate hammer is sized and shaped to fit into the screw-in retainer bore. The elongate hammer is sized and shaped to strike the rear end of the helical fastener within the bore.

The method can include forming a pilot hole in the substrate, and driving percussively the fastener into the pilot hole.

The method can include applying a cover, such as render, over the insulation.

It is far easier to apply forward axial controlled push than it is to apply torque using shallow angles. The common tendency with prior art devices is to over screw them into softer materials, which under some circumstances can chew them apart. Since the helical fastener is pushed in, rather than screwed in, it can't be over-tightened.

The helical fastener is secured to the substrate both in compression and tension as is locked off from any induced un-winding tendencies under load. The novel approach of using a percussively driven helical fastener uniquely provides resistance to axial forces in tension and compression directions. This means that the retainer is held in position and is able to resist axial forces in the tension and compression directions. When such a fixing enters the wall material it is secure regardless of any voids behind the insulation. There will be no negative screw in clamping effect on the helical bladed fastener. The helical fastener will carry compressive and tensile loads by equal and opposite action and reaction. The fastener resists rotation when under load by virtue of the helical blades biting into the substrate. The pilot hole can have a pre-cast helical form in the bore to more readily receive the helical form. It may also have a keyhole profile that mates with the helical shaft.

Another advantage of using a helical fastener is that it tends to have a much more slender cross section than torque screws and no large head to conduct and loose heat across the insulation.

An embodiment of the present invention will now be described, by way of example only, with reference to the accompanying drawings in which:
Figure 1 shows a prior art anchor;
Figure 2 shows an anchor according to the invention, which includes a screw-in retainer and a helical fastener;
Figure 3 shows an alternative screw-in retainer to that shown in Figure 1, wherein every second rotation of spiral lead is removed to avoid chewing up insulation as the retainer is torqued in;
Figure 4 shows the anchor of Figure 1 being driven into insulation and a substrate by a power tool that delivers multiple impacts;
Figure 5 is a detailed view of part of the helical fastener shown in Figure 1; and
Figure 6 is a cross-sectional view of the helical fastener shown in Figure 1, the cross-section being transverse to a longitudinal axis of the fastener.

Figure 2 shows an anchor 1 for securing insulation 2 to a substrate 4 in accordance with an embodiment of the invention. The anchor is typically used in the construction industry to secure insulation 2, such as mineral wool, fibreglass, expanded polystyrene, expanded polyurethane and similar, to a substrate 4, such as a masonry wall, timber wall, timber frame, etc.

The anchor 1 includes a screw-in retainer 3 (hereinafter retainer 3) and a helical fastener 5 (hereinafter fastener 5).

The fastener 5 is of the type that is percussively driven into a substrate 4 such as masonry, concrete or timber. The fastener 5 is typically driven percussively by an impact delivering power tool in the manner described below. The fastener 5 comprises a twisted wire body. The fastener 5 includes: an elongate core 7; first and second blades 9,11 that protrude radially outwardly from the core 7, and which extend helically along at least a substantial portion of the length of the core 7; and a tapered leading end 13.

The first and second blades 9,11 are arranged substantially opposite to one another. The first and second blades 9,11 provide the fastener 5 with first and second helical formations (sometimes referred to as starts). The blades 9,11 cut helical formations into the substrate 4 as the fastener 5 is driven percussively into the substrate 4.

The fastener 5 has a sufficient length such that each blade 9,11 is continuous around the core 7 for at least one full 360° rotation of lead, and preferably is sufficiently long such that each blade 9,11 is continuous around the core 7 for at least two full rotations of lead. Typically the length of the fastener 5 is such that each blade 9,11 is continuous around the core 7 for less than five full rotations of lead, and preferably less than four full rotations of lead. Typically each blade 9,11 extends along at least 80% of the full length of the core 7, preferably at least 85%, more preferably at least 90%, and more preferably still at least 95%.

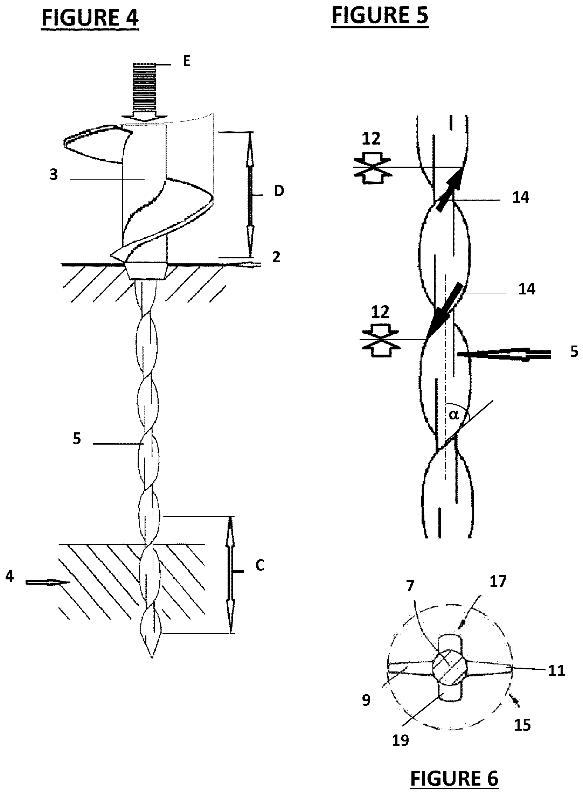

Figure 5 shows a portion of the fastener of Figure 1 and identifies a helical angle α of the blades 9,11. It will be appreciated that in order for the fastener to be driven in percussively by axial impacts, the blades 9,11 have to be loosely wound blades 9,11, as opposed to conventional tightly coiled screw threads, which are driven in with a primarily rotational driving force. Typically the angle α is between 20° and 50° to the longitudinal axis of the fastener, at the maximum radius of the blade 9,11. Thus the blades are inclined at an angle α that is closer to the longitudinal axis of the fastener than to an axis that is perpendicular to the longitudinal axis.

Typically each helical blade 9,11 has a lead C that is greater than or equal to 30mm (see Figure 4), preferably greater than or equal to 35mm, and more preferably still greater than or equal to 40mm. Typically each helical blade 9,11 has a lead C that is less than or equal to 60mm, preferably less than or equal to 55mm, and more preferably still less than or equal to 50mm. The inventor has discovered that a lead in the range 30mm to 50mm is particularly well suited to this application. The lead C is the distance along the blades axis that is covered by one complete 360° rotation of the blade 9,11. The Pitch is the distance between successive blade crests. Since the fastener 5 includes two blades 9,11, it is the distance from the crest of one the first and second blades 9,11 to the next crest of the other of the first and second blades 9,11. Since the fastener has two starts the lead C is equal to twice the pitch, for this fastener 5.

Figure 5 also illustrates how the helical fastener 5 manages to lock off tensile and compressive forces 12 against the inherent equal and opposite resultants 14 of a helical fastener 5.

Figure 6 shows diagrammatically, in an enlarged form, a transverse cross-section of the fastener 5 and a circumscribed diameter 15 of the blades 9,11. It can be seen that each blade 9,11 is tapered, having a thicker root adjacent the core 7 and a narrower tip distal from the core 7. Preferably the gauge of the blade at its tip is at least 0.25mm, and is preferably less than 2.5mm. Preferably the blades 9,11 are work hardened.

The fastener 5 also includes stubby reinforcing ribs 17,19 (hereinafter ribs 17,19) that extend radially outwards from the core 7. The ribs 17,19 are arranged substantially opposite to one another. The ribs 17,19 are spaced equidistantly between the blades 9,11. Each rib 17,19 has at its outer periphery a thickness that is between 1.5 times and 8.5 times the thickness of one the blade tips. Each rib 17,19 has the same lead distance as the blades 9,11. Each rib 17,19 is radially shorter than the radial length of the blades 9,11. Each rib 17,19 typically has a helical angle of between 8° and 23° to the fastener's longitudinal axis. Each rib 17,19 has a helical angle that is at least 6° more shallow than a helical angle α of the blades 9,11.

For some applications, the circumscribed diameter 15 of the helical blades may be as low as approximately 6mm, such as might be useful in instances where great flexibility of a fastener would be an asset to a particular application. For some applications, the circumscribed diameter 15 of the blades may be as high 19mm for uses that require greater shear resisting capacity and rigidity. In some preferred applications, the circumscribed diameter is approximately 5mm to 10mm. Typically the core 7 has a maximum cross sectional diameter that is at least sixty percent less than a cross sectional circumscribed diameter of the helical blades 9,11.

The length of the fastener 5 is typically greater than or equal to around 50mm. The length of the fastener 5 is typically less than or equal to around 300mm.

The tapered leading end 13 can be pointed, for example can be conical or frusto-conical, or may be chiselled.

The retainer 3 is a separate component from the fastener 5. The retainer 3 includes a cylindrical body 21 and a screw thread 23. The body has a length which is typically in the range 45mm to 55mm. The screw thread 23 protrudes radially outwards from the body 21. Typically the screw thread 23 has a lead D that is greater than or equal to 30mm (see Figure 4), preferably greater than or equal to 35mm, and more preferably still greater than or equal to 40mm. Typically screw thread 23 has a lead D that is less than or equal to 60mm, preferably less than or equal to 55mm, and more preferably still less than or equal to 50mm. The inventor has discovered that a lead in the range 30mm to 50mmis particularly well suited to this application. Having a large lead means that the pitch (since the retainer 3 only includes a single start, the pitch dimension is the same as the lead dimension) is relatively large, which provides a relatively large gap in which to receive insulation 2, and fewer helical turns are cut into the insulative material on insertion than are cut by the prior art device, thereby better gripping the insulation 2 and reducing damage to the insulation 2. The screw thread 23 lead D substantially matches the lead of the fastener 5 (see Figure 4). This ensures that the retainer 3 screws into the insulation 2 at the same rate as the fastener 5 is inserted into the substrate 4.

The thread 23 has a spiral arrangement towards it leading end. The radial distance of the thread 23 at the leading end is smaller than the radial distance of the thread towards the rear end. The radial distance from a central axis of the body at the leading end is typically in the range 10mm to 20mm. The radial distance from a central axis of the body at the rear end is typically in the range 25mm to 35mm. The screw thread 23 is chamfered at radial distal portions to provide a sharp edge. The screw thread 23 includes a chamfered portion at its start to cut more easily into the insulation 2.

The thread 23 is inclined at an angle ß to a longitudinal axis of the retainer 3. The angle ß is typically in the range 60° to 85° to the longitudinal axis of the fastener, at the maximum radius of the thread 23. Preferably the angle ß is in the range 72° to 83° to the longitudinal axis of the fastener. Thus the blades are inclined at an angle ß that is closer to a perpendicular to the longitudinal axis than it is to the longitudinal axis of the fastener.

The thread 23 extends around the body for a limited amount, so that there are relatively few turns to cut into the insulation 2. The thread extends around the body 21 for at least 270°. Typically the thread extends around the body 21 for less than 450°. Preferably the thread 23 extends around the body 21 in a range 300° to 400°.

The body 21 includes a bore 25. The bore 25 has a substantially cylindrical cross-section, the cross-section being transverse to a longitudinal axis of the retainer 3. The bore 25 is open at a rear end 27. The bore 25 includes an end wall 29 located toward a front end 31 of the body. An aperture 33 is formed through end wall 29. The aperture 33 is arranged to receive the fastener 5. Preferably the aperture 33 is shaped to match the transverse cross-section of the fastener 5, which is cruciform in this instance (see Figure 6). Preferably aperture is sized such that there is a relatively tight fit between the body 21 and the fastener 5 so that as the fastener 5 is driven into the substrate 4 the blades 9,11 engage the body 21 and apply torque thereto.

The retainer 3 is mounted on to the fastener 5. The retainer 3 is movable longitudinally along the fastener 5. Thus the retainer 3 is capable of translational movement relative to the fastener 5.

The fastener 5 is disposed within the bore 25 and the aperture 33. The walls defining the aperture 33 frictionally engage the blades 9,11. Since the body engages the helical blades 9,11, the connection between them provides some resistance to axial loads applied to the retainer 3, in both directions along the axis of the fastener 5, that is, compression and tension.

The fastener 5 can be arranged such that it does not separate from the retainer 3. For example, a rear end of the fastener 5 can be sized and shaped such that it does not fit through the aperture 33. One option is to include a head at the rear end of the fastener. Additionally, or alternatively, the rear end of the fastener can be formed/deformed so that it does not fit through the aperture 33, thereby preventing the retainer 3 from separating from the fastener 5. Additionally, or alternatively, a mid portion of the fastener can be formed/deformed so that it does not fit through the aperture 33, thereby preventing the retainer 3 from separating from the fastener 5.

The anchor 1 is arranged such that the fastener 5 applies torque to the retainer 1 as the fastener 5 is driven into the substrate 4. As the fastener 5 is driven into the substrate 4 the helical arrangement of the blades 9,11 cause the fastener to rotate about its longitudinal axis. Torque is transmitted from the fastener 5 to the retainer 3 by means of the blades 9,11 engaging walls of the body 21, which define the aperture 33. Thus driving percussively the fastener 5 into the substrate 4 causes the retainer 5 to rotate. This rotation screws the retainer 5 into the insulation 2.

The rotation per axial distance will be constant throughout the anchor. Commonly this will be of the order of one full rotation per an axial distance equivalent to five circumscribed diameters 15, end to end, of the fastener 5. This sort of helical arrangement provides a large tangential outward force of angles that creates a large diameter spread of resultants as shown by the long white arrows B. This diameter of thrust at the base is also enhanced by the retainer 3 being positioned relatively shallowly below the surface of the insulation 2. It can be seen that this base diameter is far greater than in figure 1. This means that when a wind suction load is applied to the insulation 2 an anchor according to the invention will provide substantively more wind suction resistance. The retainer 3 does not chew up the insulation 2 material within the cylindrical passage 4, meaning that the system will be capable of carrying greater compressive loads.

To attach insulation 2, such as mineral wool, fibreglass, expanded polystyrene, expanded polyurethane or similar, to a substrate 4, such as a masonry, concrete or timber, an impact delivering power tool (not shown), such as a hammer drill, is fitted with an S.D.S adaptor and an elongate hammer tool for transmitting percussive drive from the power tool to the rear end of the fastener 5. An S.D.S. hammer drill delivers several hundred short impacts per minute, this is illustrated by arrow E in Figure 4. It is to be noted that the hammer drill is operated in a mode which delivers hammer blows only, that is, it does not deliver rotational drive to the fastener 5. The hammer tool has a leading end that is dimensioned to fit within bore 25, and therefore is capable of delivering percussive drive to the rear end of the fastener 5 within the bore 21.

The anchor 1 is arranged substantially perpendicularly to the insulation 2 and substrate 4, and the user energises the hammer drive to deliver percussive drive to the fastener 5 via the hammer tool. This drives the fastener 5 into the insulation 2 and the substrate 4. As the fastener 5 is driven percussively into the substrate 4, the helical fastener 5 begins to rotate about its longitudinal axis. This applies torque to the retainer 3, causing it to screw into the insulation 2. Since the retainer 5 lead is relatively large, a relatively small number of helical revolutions are cut into the insulation 2 by the retainer 3, which minimises damage to the insulation 2, and improves grip.

Optionally, a pilot hole 35 may be formed in the substrate 4 prior to inserting the anchor.

In a typical installation, multiple anchors 1 are used to attach an insulation panel / roll to the substrate.

It can be seen from the description above that the invention works in a different manner from the prior art devices described in the introductory sections. In particular: the fastener 5 is driven into the substrate percussively as opposed to being screwed in; the fastener 5 rotates the retainer 3, rather than the retainer 3 rotating the fastener 5; and it is not necessary to use a complex wall plug 111 to secure the helical fastener to the substrate 4.

Although the present invention has been described in connection with a specific preferred embodiment, it should be understood that the invention as claimed should not be unduly limited to such specific embodiments. Furthermore, it will be apparent to the skilled person that modifications can be made to the above embodiment that fall within the scope of the invention.

For example, while the screw-in retainer and helical fastener are separate components in the embodiment described above, the retainer may instead be fixed to the helical fastener. In a preferred arrangement, the retainer is welded to the helical fastener. For example, both the helical fastener and the retainer can be made from a metal, such as steel, and can be welded together. Anchors made from materials that melt at high temperatures, say greater than 900°C or 1000°C, are fire resistant, and can be certified as such.

The helical fastener may include more than two helical blades. For example, the helical fastener may include first, second and third helical blades. The first, second and third blades are circumferentially distributed about the core. The first, second and third blades provide the fastener with three starts.

Figure 3 shows how an alternative retainer 203 to that of the first embodiment. The retainer 203 is a dual threaded 223 spiral insert type, that is, it has two starts, however the arrangement misses out every second rotation of the spiral thread 223. This is to try and alleviate the problem of chewing up insulation upon insertion.

Additionally or alternatively to the end wall 29, the bore 25 may include some other internal wall, which includes the aperture 33.

## Claims

1. An anchor for fixing insulation (2) to a substrate (4), said anchor (1) including a percussively drivable helical fastener (5), and a screw-in retainer (3), said screw-in retainer (3) having a screw thread (23) arranged to cut into the insulation (2), wherein the anchor (1) is arranged such that, in use, the helical fastener (5) imparts torque to the screw-in retainer (3) as the helical fastener (5) is driven percussively into the substrate (4), causing the retainer (3) to screw into the insulation (2).

2. An anchor according to claim 1, wherein the helical fastener (5) includes a substantially solid elongate core (7) and at least one cutting blade (9,11) extending radially outwards from the core (7), said cutting blade (9,11) extending helically along at least a part of the length of the core (7).

3. An anchor according to any one of the preceding claims, wherein the lead (D) of the screw-in retainer substantially matches the lead (C) of the helical fastener.

4. An anchor according to any one of the preceding claims, wherein the lead (C,D) of at least one of the helical fastener (5) and the screw-in retainer (3) is greater than or equal to 30mm.

5. An anchor according to any one of the preceding claims, wherein the lead (C,D) of at least one of the helical fastener (5) and the screw-in retainer (3) is less than or equal to 60mm.

6. An anchor according to any one of the preceding claims, wherein the helical fastener (5) is a separate component from the screw-in retainer (3).

7. An anchor according to any one of the preceding claims, when dependent on claim 2, wherein the screw-in retainer (3) includes a body (21), and the body (21) is arranged to interact with the or each helical cutting blade (9,11) such that, in use, the helical fastener (5) imparts torque to the screw-in retainer (3) by means of the helical cutting blades (9,11) interacting with the body (21).

8. An anchor according to claim 7, wherein the body (21) includes a formation such as an aperture (33) for receiving the helical fastener (5).

9. An anchor according to claim 8, wherein the aperture (33) is sized for a tight fit with the or each helical cutting blade (9,11).

10. An anchor according to claim 8 or 9, wherein the shape of the aperture (33) substantially matches a transverse cross-section of the helical fastener.

11. An anchor according to any one of claims 8 to 10, wherein the aperture (33) has a substantially cruciform shape.

12. An anchor according to any one of claims 7 to 11, wherein the body (21) includes a central bore (25).

13. An anchor according to claim 12, wherein the bore (25) includes at least one of an end wall (29) and an internal wall, and the aperture (33) is formed in at least one of the end wall (29) and the internal wall.

14. An anchor according to any one of claims 8 to 13, wherein the helical fastener (5) has a leading end (13) and a rear end, and the rear end is sized an shaped such that it does not fit through the aperture (33).

15. An anchor according to any one of claims 2 to 14, wherein the or each helical cutting blade (9,11) has a helical angle (α) that is greater than or equal to 20° to a longitudinal axis of the fastener.

16. An anchor according to any one of claims 1 to 5, wherein the helical fastener (5) is fixed to the screw-in retainer (3).

17. An anchor according to any one of the preceding claims, wherein the screw thread (23) has a helical angle (ß) that is greater than or equal to 60° to a longitudinal axis of the fastener.

18. A method for fixing insulation (2) to a substrate (4), including: providing an anchor (1) including a percussively drivable helical fastener (5), and a screw-in retainer (3), said screw-in retainer (3) having a screw thread (23) arranged to cut into the insulation (2); driving percussively the helical fastener (5) into the substrate (4), causing the helical fastener (5) to rotate about a longitudinal axis; the helical fastener (5) imparting torque to the retainer (3) as the helical fastener (5) is driven percussively into the substrate (4); and the retainer (5) screwing into the insulation (2) in response to the torque imparted by the helical fastener (5).
